# EUROPEAN PATENT APPLICATION

(11) **EP 4 013 125 A1**
(43) Date of publication of application: **15.06.2022**
(21) Application number: 19941381.6
(22) Date of filing: 09.08.2019
(51) Int. Cl.: H04W 36/24

(54) **TERMINAL**

(71) Applicant: NTT DOCOMO, INC., Chiyoda-Ku Tokyo 100-6150 (JP)
(72) Inventor: MURATA, Naoya, Tokyo 100-6150 (JP); HANAKI, Akihito, Tokyo 100-6150 (JP); UCHINO, Tooru, Tokyo 100-6150 (JP)
(74) Representative: Hoffmann Eitle
(86) International application number: PCT/JP2019/031736
(87) International publication number: WO 2021/028992

(57) **Abstract**

A terminal (200) includes a first receiving unit (220) that, in a first cell (gNB 100A) in which the terminal (200) resides, receives configuration information of a transition destination cell (gNB 100C) from the first cell (gNB 100A) by a conditional cell transition; a second receiving unit (220) that receives a message indicating that the transition destination cell (gNB 100C) is shared with a second cell (gNB 100B); and a control unit (240) that uses the configuration information of the transition destination cell (gNB 100C) in the second cell (gNB 100B), when the terminal (200) transitions from the first cell (gNB 100A) to the second cell (gNB 100B), on the basis of the message.

## Description

### TECHNICAL FIELD

The present invention relates to a terminal that executes radio communication, particularly, a terminal that executes cell transition without waiting for a transition command.

### BACKGROUND ART

The 3rd Generation Partnership Project (3GPP) specifies Long Term Evolution (LTE), and specifies LTE-Advanced (hereinafter, collectively referred to as LTE) for the purpose of further speeding up the LTE. Further, in the 3GPP, specifications of a successor system of the LTE called 5G or New Radio (NR) have been studied.

For example, in a conventional handover (HO) procedure, a network decides a target radio base station (also called a target cell) on the basis of quality information such as a measurement report (Measurement Report) transmitted from a terminal (User Equipment: UE), and after a handover is prepared, a handover command (transition command) is transmitted to the terminal.

However, when the terminal passes an appropriate handover point while the network prepares for the handover, the terminal transitions to the target radio base station without receiving a handover command from a source radio base station (also called a source cell). For this reason, there is a problem that an instantaneous interruption of a radio link may occur.

Therefore, in order to resolve the above-described problem, a procedure called a Conditional HO (conditional cell transition) is studied (Non Patent Literature 1). In the Conditional HO, the network notifies the terminal of configuration information of a candidate cell including a candidate cell for a Conditional HO destination and a transition condition to the candidate cell.

When the transition condition to the candidate cell is satisfied, the terminal transitions to the target radio base station that has configured the transition condition to the candidate cell, without waiting for the handover command from the source radio base station. Thereby, the terminal can transition to the target radio base station at an early stage

### PRIOR ART DOCUMENT

### NON-PATENT DOCUMENT

Non Patent Document 1: "Running CR for the introduction of NR mobility enhancement", R2-1906284, 3GPP TSG-RAN WG2 Meeting # 106, 3GPP, May 2019

### SUMMARY OF THE INVENTION

However, when a normal handover that is not the Conditional HO is executed due to the movement of the terminal after the configuration information of the candidate cell is notified, the network needs to notify the terminal of configuration information of a candidate cell for a new Conditional HO destination. For this reason, there are the following problems.

Specifically, when a plurality of terminals move a cell at the same time and perform a handover, due to a movement of an electric train or the like, the network individually notifies the plurality of terminals of configuration information of a candidate cell for a new Conditional HO destination by signaling of a higher layer (for example, a radio resource control layer (RRC)).

For this reason, a signal amount of a control plane increases, which may decrease throughput.

Accordingly, the present invention has been made in view of the above circumstances, and an object thereof is to provide a terminal capable of suppressing a decrease in throughput even when a plurality of terminals move a cell at the same time while applying a conditional cell transition such as a Conditional HO.

A terminal (200) according to an aspect of the present invention includes a first receiving unit (220) that, in a first cell (gNB 100A) in which the terminal (200) resides, receives configuration information of a transition destination cell (gNB 100C) from the first cell (gNB 100A) by a conditional cell transition; a second receiving unit

(220) that receives a message indicating that the transition destination cell (gNB 100C) is shared with a second cell (gNB 100B); and a control unit (240) that uses the configuration information of the transition destination cell (gNB 100C) in the second cell (gNB 100B), when the terminal (200) transitions from the first cell (gNB 100A) to the second cell (gNB 100B), on the basis of the message.

### BRIEF DESCRIPTION OF DRAWING

Fig. 1 is an overall schematic configuration diagram of a radio communication system 10.
Fig. 2 is a functional block configuration diagram of a terminal 200.
Fig. 3 is an explanatory diagram of a conventional handover procedure.
Fig. 4 is an explanatory diagram of a handover procedure by a Conditional HO.
Fig. 5 is a diagram illustrating a basic sequence of the Conditional HO.
Fig. 6 is a diagram illustrating a take-over sequence (operation example 1) of the Conditional HO.
Fig. 7 is a diagram illustrating a take-over sequence (operation example 2) of the Conditional HO.
Fig. 8 is a diagram illustrating a take-over sequence (operation example 3) of the Conditional HO.
Fig. 9 is a diagram illustrating a CHO setting list.
Fig. 10 is a diagram illustrating a setting sequence using a list of the Conditional HO.
Fig. 11 is a diagram illustrating a difference setting sequence of the Conditional HO.
Fig. 12 is a diagram illustrating a basic sequence of a Conditional SCG Connection.
Fig. 13 is a diagram illustrating a take-over sequence (operation example 1) of the Conditional SCG Connection.
Fig. 14 is a diagram illustrating a take-over sequence (operation example 2) of the Conditional SCG Connection.
Fig. 15 is a diagram illustrating a take-over sequence (operation example 3) of the Conditional SCG Connection.
Fig. 16 is a diagram illustrating a setting sequence using a list of the Conditional SCG Connection.
Fig. 17 is a diagram illustrating a difference setting sequence of the Conditional SCG Connection.
Fig. 18 is a diagram illustrating an example of a hardware configuration of a terminal 200.

### MODES FOR CARRYING OUT THE INVENTIOND

Hereinafter, embodiments will be described with reference to the drawings. Note that the same functions and configurations are denoted by the same or similar reference numerals, and a description thereof is omitted as appropriate.

### (1) Overall Schematic Configuration of Radio Communication System

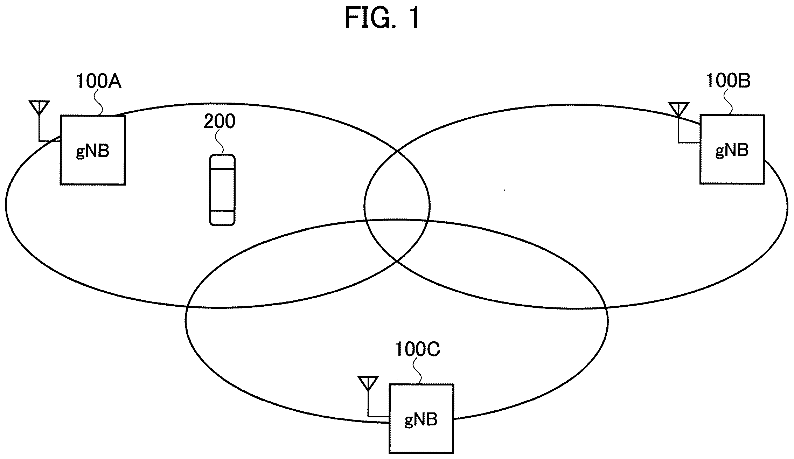

Fig. 1 is an overall schematic configuration diagram of a radio communication system 10 according to the present embodiment. The radio communication system 10 is a radio communication system according to New Radio (NR), and includes a Next Generation-Radio Access Network (NG-RAN, not illustrated) and a terminal 200. Note that the terminal is also called User Equipment (UE).

The NG-RAN includes radio base stations 100A, 100B, and 100C (hereinafter, gNBs 100A, 100B, and 100C). Note that a specific configuration of the radio communication system 10 including the number of gNBs and terminals is not limited to an example illustrated in Fig. 1.

The NG-RAN actually includes a plurality of NG-RAN Nodes, specifically, gNBs (or ng-eNBs), and is connected to a core network (5GC, not illustrated) according to the NR. Note that the NG-RAN and the 5GC may be simply expressed as a network.

Each of the gNBs 100A, 100B, and 100C is a radio base station according to the NR, and performs radio communication according to the NR with the terminal 200. Each of the gNBs 100A, 100B, and 100C and the terminal 200 can support Massive MIMO in which a more highly directional beam is generated, carrier aggregation (CA) in which a plurality of component carriers (CCs) are bundled to be used, dual connectivity (DC) for simultaneously performing communication between a plurality of NG-RAN Nodes and a terminal, and the like, by controlling a radio signal transmitted from a plurality of antenna elements. Note that the CC is also called a carrier.

Each of the gNBs 100A, 100B, and 100C forms one or more cells and manages the cells. The terminal 200 can transition between the cells (may be called radio base stations) formed by the gNBs 100A, 100B, and 100C. The "transition" typically means a handover between cells (radio base stations), and can include a behavior of the terminal 200 in which a cell (radio base station) for a connection destination is changed, such as a cell reselection.

A cell (radio base station) for a transition destination to which the terminal 200 transitions is called a target cell or a target radio base station. Further, a cell (radio base station) for a transition source is called a source cell or a source radio base station.

In the radio communication system 10, the terminal 200 can execute a handover (cell transition) according to a conditional handover (hereinafter, a conditional HO), without waiting for a handover command (transition command). Note that the Conditional HO is also abbreviated as CHO.

Note that the radio communication system 10 may include an Evolved Universal Terrestrial Radio Access Network (E-UTRAN) instead of the NG-RAN. In this case, the E-UTRAN includes a plurality of E-UTRAN Nodes, specifically, eNBs (or en-gNBs), and is connected to a core network (EPC) according to the LTE.

### (2) Functional Block Configuration of Radio Communication System

Next, a functional block configuration of the radio communication system 10 will be described. Specifically, a functional block configuration of the terminal 200 will be described. Hereinafter, only parts related to the features in the present embodiment will be described. Therefore, the terminal 200 has other functional blocks that are not directly related to the features in the present embodiment.

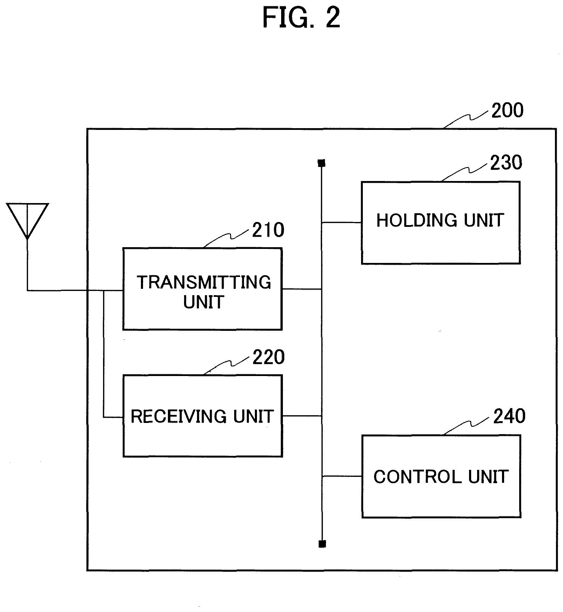

Fig. 2 is a functional block configuration diagram of the terminal 200. As illustrated in Fig. 2, the terminal 200 includes a transmitting unit 210, a receiving unit 220, a holding unit 230, and a control unit 240.

The transmitting unit 210 transmits an uplink signal (UL signal) according to the NR. The receiving unit 220 receives a downlink signal (DL signal) according to the NR. Specifically, the transmitting unit 210 and the receiving unit 220 execute radio communication with each of the gNBs 100A to 100C via a control channel or a data channel.

The transmitting unit 210 transmits an RRC message. The transmitting unit 210 transmits, for example, a Conditional HO setup completion message (CHO setup complete), a Conditional HO setup request response message (CHO setup request ACK), and a Conditional HO modification request response message (CHO modification request ACK).

The receiving unit 220 receives an RRC message. The receiving unit 220 receives, for example, a Conditional HO setup message (CHO setup), a handover command (HO command), a CHO setting list, a Conditional HO setup request message (CHO setup request), and a Conditional HO modification request message (CHO modification request). Note that the handover command is also called a transition command.

In a cell in which the terminal 200 resides, the receiving unit 220 receives configuration information of a transition destination cell (candidate cell, for example, the gNB 100C) from the cell by the Conditional HO. In this case, the receiving unit 220 is also called a first receiving unit.

The receiving unit 220 receives a message indicating that a transition destination cell (candidate cell, for example, the gNB 100C) by the Conditional HO is shared by a handover source cell (source cell, for example, the gNB 100A) and a handover destination cell (target cell, for example, the gNB 100B). In this case, the receiving unit 220 is also called a second receiving unit. Note that the transition command may include the message.

The receiving unit 220 receives a message indicating that configuration information of a transition destination cell (candidate cell, for example, the gNB 100C) by the Conditional HO is used in a handover destination cell (target cell, for example, the gNB 100B) sharing the transition destination cell, in a handover source cell (source cell, for example, the gNB 100A). In this case, the receiving unit 220 is also called a second receiving unit. Note that the transition command may include the message.

The holding unit 230 holds configuration information of a transition destination cell (candidate cell).

The control unit 240 controls each functional block configuring the terminal 200.

On the basis of the message indicating that the transition destination cell (candidate cell, for example, the gNB 100C) by the Conditional HO is shared by the handover source cell (source cell, for example, the gNB 100A) and the handover destination cell (target cell, for example, the gNB 100B), when the terminal 200 transitions from the source cell (for example, the gNB 100A) to the target cell (for example, the gNB 100B), the control unit 240 uses the configuration information of the transition destination cell (candidate cell, for example, the gNB 100C) in the target cell (for example, the gNB 100B).

On the basis of the message indicating that the configuration information of the transition destination cell (candidate cell, for example, the gNB 100C) by the Conditional HO is used in the handover destination cell (target cell, for example, the gNB 100B) sharing the transition destination cell, in the handover source cell (source cell, for example, the gNB 100A), when the terminal 200 transitions from the source cell (for example, the gNB 100A) to the target cell (for example, the gNB 100B), the control unit 240 uses the configuration information of the transition destination cell (candidate cell, for example, the gNB 100C) in the target cell (for example, the gNB 100B) .

When the receiving unit 220 receives index information assigned to a cell (for example, the gNB 100A) in which the terminal 200 resides, the control unit 240 refers to the CHO setting list, searches for configuration information of a transition destination cell (candidate cell) by the Conditional HO associated with the index information, and executes setting of the transition destination cell.

When the receiving unit 220 receives difference information between the configuration information of the transition destination cell (candidate cell) by the Conditional HO previously notified from a cell (for example, the gNB 100A) in which the terminal 200 resides and current configuration information of a transition destination cell (candidate cell) by the Conditional HO in the cell, the control unit 240 executes a configuration change of the transition destination cell previously notified, on the basis of the difference information.

### (3) Operation of Radio Communication System

Next, an operation of the radio communication system 10 will be described. Specifically, after explaining an operation of the Conditional HO, take-over of the Conditional HO (candidate cell), setting by a list of the Conditional HO (candidate cell), and difference setting of the Conditional HO (candidate cell) will be described in order.

### (3.1) Conditional HO

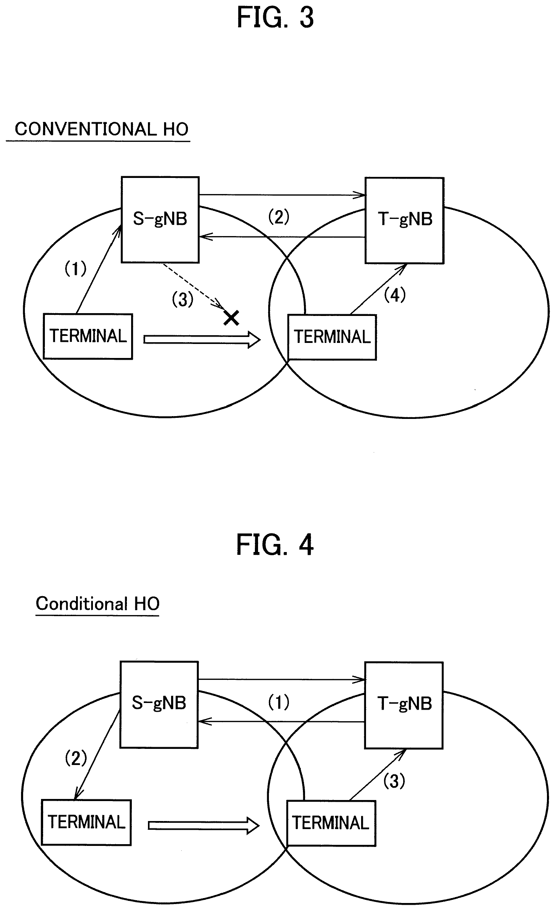

Fig. 3 is an explanatory diagram of a conventional handover procedure, and Fig. 4 is an explanatory diagram of a handover procedure by the Conditional HO.

As illustrated in Fig. 3, in the conventional handover procedure, a network (for example, a source radio base station (S-gNB)) decides a target radio base station (T-gNB) on the basis of quality information such as a measurement report transmitted from a terminal ((1) in the figure) and prepares for a handover ((2) in the figure), and then a handover command is transmitted to the terminal ((3) in the figure).

However, if the terminal passes an appropriate handover point while the network prepares for the handover, it may transition to a target radio base station without receiving the handover command from the source radio base station ((4) in the figure) (this may be called "too late HO"). For this reason, the terminal cannot recognize configuration related to the target radio base station, and an instantaneous interruption of a radio link may occur.

In order to resolve the above-described problem, a procedure called the Conditional HO is studied. In the Conditional HO, a candidate cell for a Conditional HO destination and a transition condition to the candidate cell are previously configured to the terminal. Thereby, the terminal can be connected to the target radio base station without waiting for an instruction (handover command) from the network, which avoids an instantaneous interruption of the radio link.

Specifically, as illustrated in Fig. 4, a preparation for a handover is previously executed between the source radio base station (S-gNB) and the target radio base station (T-gNB) ((1) in the figure), and the terminal is notified of configuration information of the candidate cell for the Conditional HO destination including a transition condition to the target radio base station and the like ((2) in the figure). When the terminal decides to connect to the target radio base station due to a movement or the like, the terminal starts an RA procedure with the target radio base station, on the basis of the configuration information of the candidate cell ((3) in the figure).

Note that the "handover command" may be called reconfigurationWithSync in NR, and may be called RRC connection reconfiguration (including mobilitycontrolinfo) in LTE.

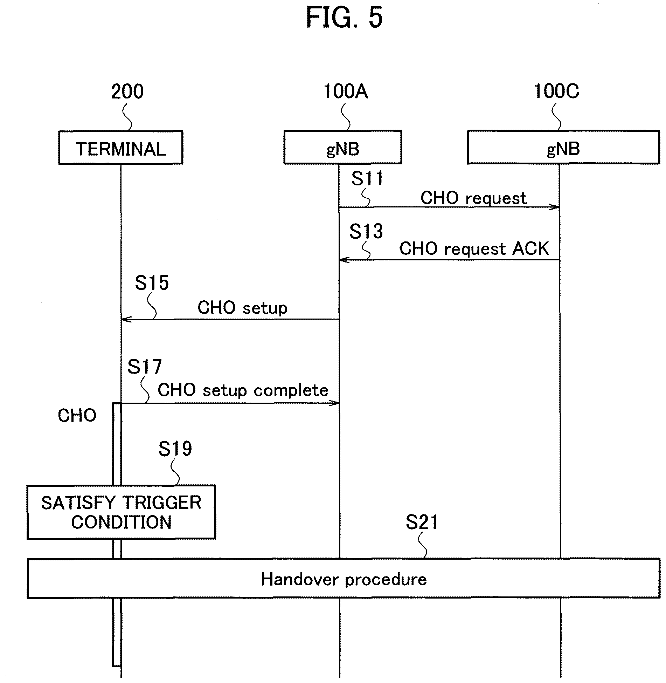

Fig. 5 illustrates a basic sequence of the Conditional HO. As illustrated in Fig. 5, the gNB 100A (source cell) transmits a Conditional HO request message (CHO request) to the gNB 100C, which is a candidate cell for a transition destination cell by the Conditional HO (S11) Note that the number of candidate cells is not limited to one, and may be two or more.

When the gNB 100C (candidate cell) receives the CHO request from the gNB 100A, the gNB 100C transmits a Conditional HO request response message (CHO request ACK) , which is an acknowledgment to the CHO request, to the gNB 100A (S13). The CHO request ACK includes configuration information of the candidate cell. The configuration information of the candidate cell includes information on the candidate cell and a transition condition to the candidate cell.

By the above-described processing, the gNB 100C is set as the candidate cell for the Conditional HO destination of the terminal 200.

When the gNB 100A receives the CHO request ACK from the gNB 100C, the gNB 100A transmits a CHO setup to the terminal 200 after the setting of the candidate cell is completed (S15). The CHO setup includes the configuration information of the candidate cell transmitted from the gNB 100C. The terminal 200 executes the setting of the candidate cell, on the basis of the CHO setup, and transmits a CHO setup complete to the gNB 100A after the setting of the candidate cell is completed (S17).

Then, the terminal 200 can execute the Conditional HO to the candidate cell, and when the transition condition (trigger condition) to the candidate cell is satisfied (S19), the terminal 200 executes a handover procedure to the candidate cell according to the Conditional HO (S21).

Note that the gNB 100A may receive only the information on the candidate cell from the gNB 100C in S13. In this case, the gNB 100A configures the transition condition to the candidate cell. Further, in this case, the configuration information of the candidate cell includes the information on the candidate cell and the transition condition to the candidate cell configured by the gNB 100A.

### (3.2) Take-Over of Conditional HO (Candidate Cell)

Next, the take-over of the Conditional HO will be described. In the present operation, when the terminal 200 transitions from the gNB 100A (source cell) to the gNB 100B (target cell), the terminal 200 uses the configuration information of the candidate cell notified by the gNB 100A in the gNB 100B.

"Using the configuration information of the candidate cell notified by the gNB 100A in the gNB 100B" described above may be expressed as "taking over the configuration information of the candidate cell notified by the gNB 100A in the gNB 100B", "not deleting the configuration information of the candidate cell notified by the gNB 100A in the gNB 100B", "not considering the configuration information of the candidate cell notified by the gNB 100A invalid in the gNB 100B", "considering the configuration information of the candidate cell notified by the gNB 100A valid in the gNB 100B", or "not removing the configuration information of the candidate cell notified by the gNB 100A in the gNB 100B". Further, the configuration information of the candidate cell is called a CHO configuration.

Note that, in the present operation example, the gNB 100A is a source cell, the gNB 100B is a target cell, and the gNB 100C is a candidate cell of the CHO. Further, the gNB 100A and the gNB 100B share the gNB 100C as the candidate cell of the CHO. Further, the gNB 100A and the gNB 100B are also called a first cell and a second cell, respectively. The gNB 100C is also called a transition destination cell by the conditional cell transition.

In the present operation, the terminal 200 performs a normal handover and transitions from the gNB 100A to the gNB 100B. In this case, the handover may be set to operate preferentially over the Conditional HO. Specifically, the Conditional HO is suspended during the execution of the handover, and the Conditional HO is resumed when the handover is completed.

Note that the terminal 200 may transition from the gNB 100A to the gNB 100B, according to the Conditional HO. In this case, the gNB 100B is one of candidate cells of the CHO.

### (3.2.1) Operation Example 1

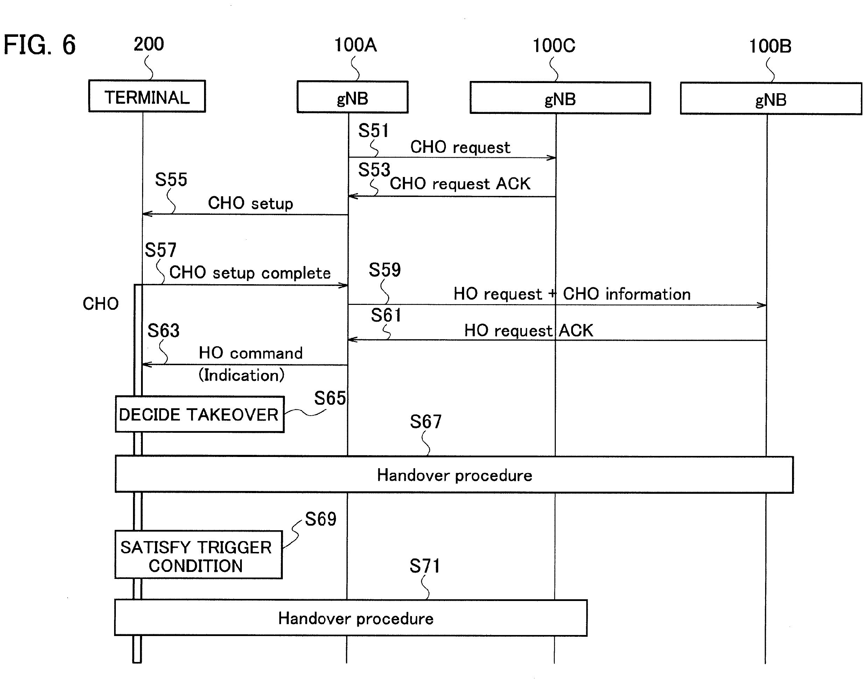

Fig. 6 is a diagram illustrating a take-over sequence (operation example 1) of the Conditional HO. Since S51 to S57 in Fig. 6 correspond to S11 to S17 in Fig. 5, a description is omitted. As illustrated in Fig. 6, when the gNB 100A decides to cause the terminal 200 to transition to the gNB 100B, the gNB 100A transmits a handover request message (HO request) to the gNB 100B (S59). In S59, the gNB 100A may transmit the configuration information of the candidate cell to the gNB 100B as CHO information. Note that the transmission of the CHO information may be executed before or after the transmission of the HO request.

By receiving the CHO information from the gNB 100A, the gNB 100B can acquire an identifier (for example, a tunnel endpoint identifier (TEID)) for identifying a transmission destination to be used at the time of data forwarding. Thereby, in the present operation example, in the process in which the terminal 200 transitions from the gNB 100B to the gNB 100C (the candidate cell of the CHO), the gNB 100B can perform data forwarding to the gNB 100C (the candidate cell of the CHO) .

When the gNB 100B receives the HO request from the gNB 100A, the gNB 100B transmits a handover request response message (HO request ACK), which is an acknowledgment to the HO request, to the gNB 100A (S61).

When the gNB 100A receives the HO request ACK from the gNB 100B, the gNB 100A transmits an HO command (transition command) to the terminal 200 (S63). When the terminal 200 receives the HO command, the terminal 200 suspends the Conditional HO. Further, at timing of transmitting the HO command in S63, the gNB 100A transmits, to the terminal 200, a message (Indication) indicating that the candidate cell of the CHO notified from the gNB 100A is shared by the gNB 100A and the gNB 100B. In the present operation example, the message is included in the HO command.

By the above-described message, the gNB 100A can explicitly notify the terminal 200 that the candidate cell is also shared by the gNB 100B. On the basis of the above-described message, when the terminal 200 transitions from the gNB 100A (source cell) to the gNB 100B (target cell), the terminal 200 decides to take over (use) the configuration information of the candidate cell notified by the gNB 100A in the gNB 100B (S65).

Note that, instead of the message indicating that the candidate cell of the CHO notified from the gNB 100A is shared by the gNB 100A and the gNB 100B, the gNB 100A may transmit, to the terminal 200, a message (Indication) indicating that the configuration information of the candidate cell notified by the gNB 100A is also used in the gNB 100B sharing the candidate cell. In the present operation example, the message is included in the HO command.

By the above-described message, the gNB 100A can directly notify the terminal 200 that the configuration information of the candidate cell is also used in the gNB 100B. On the basis of the above-described message, when the terminal 200 transitions from the gNB 100A (source cell) to the gNB 100B (target cell), the terminal 200 decides to take over (use) the configuration information of the candidate cell notified by the gNB 100A in the gNB 100B (S65) .

Note that the "message indicating that the configuration information of the candidate cell notified by the gNB 100A is used in the gNB 100B sharing the candidate cell" may be expressed as a "message indicating that the configuration information of the candidate cell notified by the gNB100A is taken over in the gNB 100B sharing the candidate cell", a "message indicating that the configuration information of the candidate cell notified by the gNB 100A is not deleted in the gNB 100B sharing the candidate cell", a "message indicating that the configuration information of the candidate cell notified by the gNB 100A is not considered invalid in the gNB 100B sharing the candidate cell", a "message indicating that the configuration information of the candidate cell notified by the gNB 100A is considered valid in the gNB 100B sharing the candidate cell", or a "message indicating that the configuration information of the candidate cell notified by the gNB 100A is not removed in the gNB 100B sharing the candidate cell".

Note that the "message indicating that the candidate cell of the CHO notified by the gNB 100A is shared by the gNB 100A and the gNB 100B", or the "message indicating that the configuration information of the candidate cell notified by the gNB 100A is also used in the gNB 100B sharing the candidate cell" described above may be transmitted at the timing of transmitting the configuration information of the candidate cell in S55. In this case, the message may be included in the CHO setup.

When the terminal 200 receives the HO command from the gNB 100A, the terminal 200 performs an RA procedure, a synchronization establishment procedure, and a reset and re-establishment procedure of Layer 2 between the gNB 100B and the terminal 200, and transitions to the gNB 100B (S67).

When the terminal 200 transitions to the gNB 100B, the terminal 200 resumes the Conditional HO and uses the configuration information of the candidate cell notified by the gNB 100A. When the transition condition (trigger condition) to the candidate cell is satisfied (S69), the terminal 200 executes a handover procedure to the candidate cell according to the Conditional HO (S71).

Note that the "message indicating that the candidate cell of the CHO notified by the gNB 100A is shared by the gNB 100A and the gNB 100B" described above may be notified from the gNB 100B after the terminal 200 transitions to the gNB 100B. Further, the message may be notified for each combination of the source cell and the target cell. Further, the message may be notified for each terminal, for each media access control (MAC) entity, or for each cell group.

Further, the take-over of the candidate cell by the terminal 200 may be triggered by any one of an RA procedure, a synchronization establishment procedure, a reset procedure of Layer 2, and a re-establishment procedure of Layer 2.

### (3.2.2) Operation Example 2

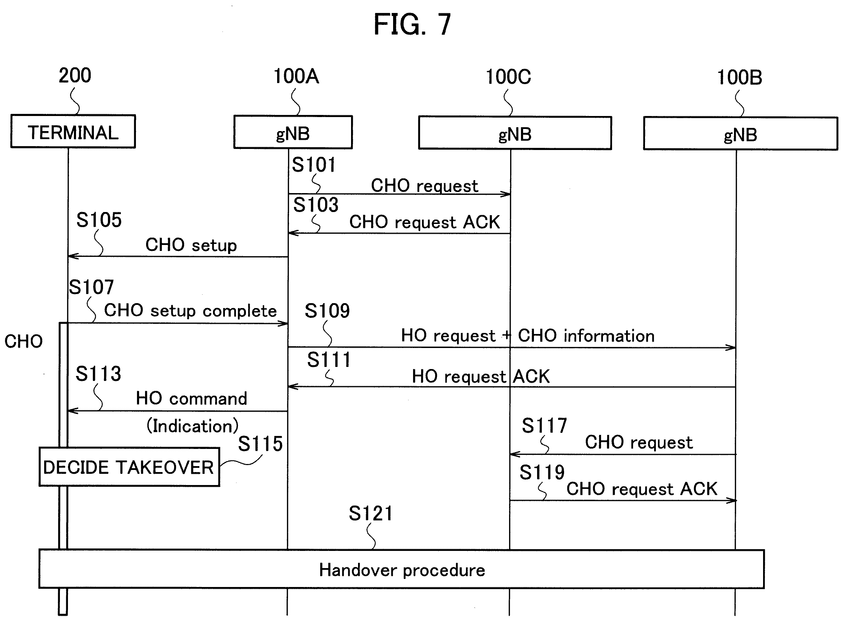

Fig. 7 is a diagram illustrating a take-over sequence (operation example 2) of the Conditional HO. Since S101 to S113 and S121 in Fig. 7 correspond to S51 to S67 in Fig. 6, a description is omitted. Note that, in S109, the gNB 100B receives, as CHO information, a message indicating that the gNB 100A has notified the terminal 200 of the configuration information of the candidate cell in S105.

As illustrated in Fig. 7, after transmitting the HO request ACK to the gNB 100A, the gNB 100B transmits a CHO request to the gNB 100C (S117). When the gNB 100C receives the CHO request from the gNB 100B, the gNB 100C transmits a CHO request ACK, which is an acknowledgment to the CHO request, to the gNB 100B (S119). The CHO request ACK includes configuration information of the candidate cell. The configuration information of the candidate cell includes at least information on the candidate cell.

In S119, by receiving the information on the candidate cell from the gNB 100C, the gNB 100B can acquire an identifier (for example, TEID) for identifying a transmission destination to be used at the time of data forwarding. Thereby, in the present operation example, in the process in which the terminal 200 transitions from the gNB 100B to the gNB 100C (the candidate cell of the CHO), the gNB 100B can perform data forwarding to the gNB 100C (the candidate cell of the CHO).

### (3.2.3) Operation Example 3

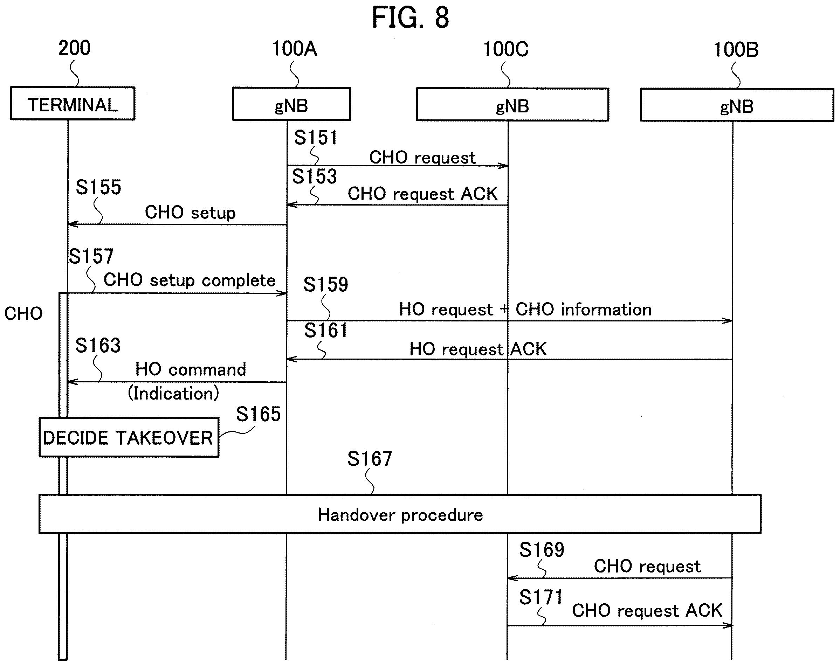

Fig. 8 is a diagram illustrating a take-over sequence of Conditional HO (operation example 3). Since S151 to S167 in Fig. 8 are the same processing as S51 to S67 in Fig. 6, a description is omitted. Note that, in S159, the gNB 100B receives, as CHO information, a message indicating that the gNB 100A has notified the terminal 200 of the configuration information of the candidate cell in S155.

As illustrated in Fig. 8, when the terminal 200 transitions to the gNB 100B, the gNB 100B transmits a CHO request to the gNB 100C (S169). When the gNB 100C receives the CHO request from the gNB 100B, the gNB 100C transmits a CHO request ACK, which is an acknowledgment to the CHO request, to the gNB 100B (S171). The CHO request ACK includes configuration information of the candidate cell. The configuration information of the candidate cell includes at least information on the candidate cell.

In S171, by receiving the information on the candidate cell from the gNB 100C, the gNB 100B can acquire an identifier (for example, TEID) for identifying a transmission destination to be used at the time of data forwarding. Thereby, in the present operation example, after the terminal 200 transitions from the gNB 100B to the gNB 100C (the candidate cell of the CHO), the gNB 100B can perform data forwarding to the gNB 100C (the candidate cell of the CHO).

### (3.2.4) Others

Note that the terminal 200 may not take over the configuration information of the candidate cell in the following cases.

- Case where the terminal 200 does not have an ability to take over the configuration information of the candidate cell
- Case where the take-over capacity exceeds capacity that the terminal 200 can take over (for example, case where the capacity of the configuration information of the candidate cell exceeds the capacity that the terminal 200 can take over)
- Case where the terminal 200 is connected to or has been connected to a specific cell, a specific frequency, or a specific partial bandwidth (BWP)

### (3.3) Setting by List of Conditional HO (candidate cell)

Next, the setting by a list of the Conditional HO will be described. In the present operation, the terminal 200 identifies configuration information of a candidate cell applied in the cell in which the terminal 200 resides, on the basis of a CHO setting list previously notified.

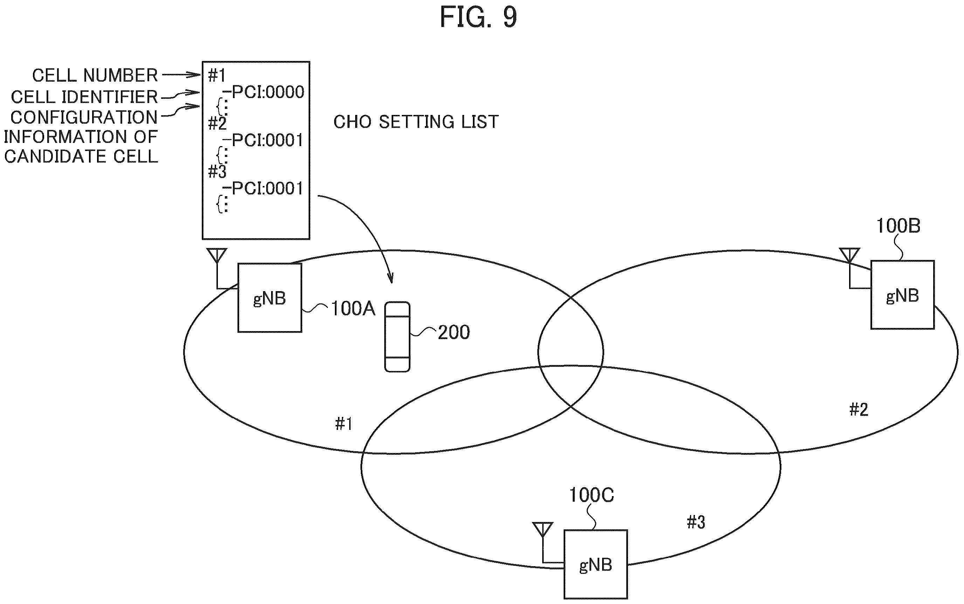

Fig. 9 is a diagram illustrating the CHO setting list. As illustrated in Fig. 9, the CHO setting list includes a plurality of combinations each of which includes a cell number, a cell identifier, and configuration information of a candidate cell.

Specifically, cell numbers #1, #2, and #3 correspond to three pieces of index information #1, #2, and #3 assigned to cells formed by the gNBs 100A, 100B, and 100C, respectively. The cell identifier corresponds to a physical cell identifier (PCI) of the cell to which each cell number is assigned.

Note that each combination included in the CHO setting list may include other information in addition to the cell number, the cell identifier, and the configuration information of the candidate cell. For example, the CHO setting list may include a plurality of combinations each of which includes a cell number, a cell identifier, configuration information of a candidate cell, and a list of cells to be measured.

Further, in the CHO setting list, configuration information of a candidate cell previously set to a cell formed by each of the gNBs 100A, 100B, and 100C may be matched with at least a part of plural pieces of configuration information of candidate cells previously set to other cells, or may be different from all of them.

In the present operation example, the terminal 200 executes a normal handover or a handover according to the Conditional HO, and transitions to the gNB 100A. Further, in the present operation example, the gNBs 100B and 100C are candidate cells of the CHO.

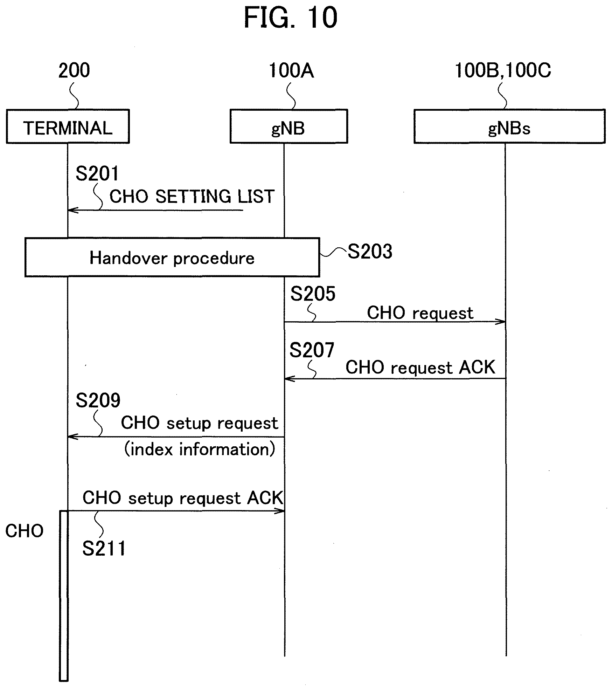

Fig. 10 is a diagram illustrating a setting sequence by a list of the Conditional HO. As illustrated in Fig. 10, the terminal 200 previously receives a CHO setting list from the network (S201). When the terminal 200 receives the CHO setting list from the network, the terminal 200 transmits an acknowledge which is an acknowledgement to the network. The network is, for example, a gNB (cell) in which the terminal 200 resides when the terminal 200 transitions to an active state.

In S201, the CHO setting list may be notified to the terminal 200 using information not individually signaled to the terminal 200 (that is, non-UE specific information), broadcasting information (System Information Block), a MAC control element (CE), a MAC protocol data unit (PDU), or L1 downlink control information.

Note that, after transmitting the CHO setting list in S201, the network may change a part of the CHO setting list. In this case, the network transmits the changed CHO setting list or a message indicating the changed contents of the CHO setting list to the terminal 200.

After previously receiving the CHO setting list from the network, the terminal 200 executes a normal handover or a handover according to the Conditional HO, and transitions to the gNB 100A (S203).

When the execution of the handover is completed between the gNB 100A and the terminal 200, the gNB 100A (source cell) transmits a CHO request to the gNBs 100B and 100C each of which is a candidate cell to be a candidate for the transition destination cell by the Conditional HO (S205). Note that the number of candidate cells is not limited to two, and may be one or three or more.

When each of the gNBs 100B and 100C (candidate cells) receives the CHO request from the gNB 100A, it transmits a CHO request ACK, which is an acknowledgment to the CHO request, to the gNB 100A (S207). The CHO request ACK includes configuration information of the candidate cell. The configuration information of the candidate cell includes information on the candidate cell and a transition condition to the candidate cell.

Thereby, the gNB 100A can acquire an identifier (for example, a tunnel endpoint identifier (TEID)) for identifying a transmission destination to be used at the time of data forwarding. Therefore, in the process in which the terminal 200 transitions from the gNB 100A to the gNB 100B or the gNB 100C (the candidate cell of the CHO), the gNB 100A can perform data forwarding to the gNB 100B or the gNB 100C (the candidate cell of the CHO).

When the gNB 100A receives the CHO request ACK from each of the gNBs 100B and 100C, the gNB 100A transmits a CHO setup request to the terminal 200 (S209). The CHO setup request includes index information assigned to the cell formed by the gNB 100A. When the terminal 200 receives the CHO setup request, the terminal 200 refers to the CHO setting list previously notified, and searches for the configuration information of the candidate cell associated with the cell number corresponding to the index information included in the CHO setup request. After the setting of the candidate cell is completed, the terminal 200 transmits a CHO setup request ACK to the gNB 100A (S211).

Specifically, in S209, the gNB 100A transmits the CHO setup request including the index information #1 to the terminal 200. When the terminal 200 receives the CHO setup request, the terminal 200 refers to the CHO setting list, searches for the configuration information of the candidate cell associated with the cell number #1 corresponding to the index information #1, and executes setting of the candidate cell.

Thereby, when the terminal 200 transitions to each gNB, the gNB notifies the terminal 200 of the CHO setup using the index information, so that it is possible to cause the terminal 200 to set the configuration information of the candidate cell in the cell formed by the gNB. Therefore, even when a plurality of terminals 200 move cells at the same time, a decrease in throughput can be suppressed.

Note that each gNB may be previously notified of a method for notifying the terminal 200 of the index information assigned to the cell formed by the gNB, from the network.

Further, each gNB may notify the terminal 200 of the index information, separately from the CHO setup request, thereby causing the terminal 200 to delete or suspend the configuration information of the candidate cell associated with the cell number corresponding to the index information. In this case, the index information may be notified to terminal 200 using MAC CE or L1 downlink control information.

### (3.4) Difference Setting of Conditional HO (Candidate Cell)

Next, the difference setting of the Conditional HO will be described. In the present operation, the gNB 100A changes the configuration information of the candidate cell previously notified to the terminal 200. In the present operation example, after notifying the terminal 200 of the configuration information of the gNB 100C (candidate cell), the gNB 100A causes the terminal 200 to add the configuration information of the gNB 100B (candidate cell).

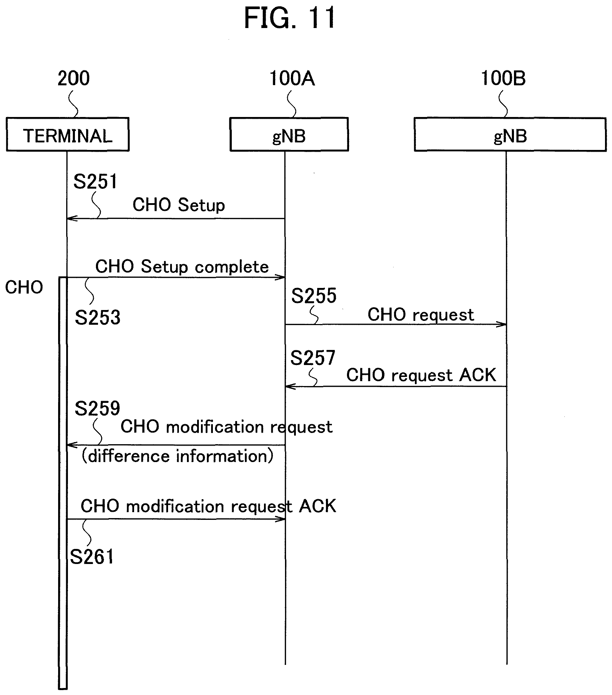

Fig. 11 is a diagram illustrating a difference setting sequence of the Conditional HO. Note that, since S251 and S253 in Fig. 11 correspond to S15 and S17 in Fig. 5, a description is omitted.

When the gNB 100A finds the gNB 100B as a candidate cell to be a candidate for the transition destination cell by the Conditional HO, the gNB 100A transmits a CHO request to the gNB 100B (S255).

When the gNB 100B (candidate cell) receives the CHO request from the gNB 100A, the gNB 100B transmits a CHO request ACK, which is an acknowledgment to the CHO request, to the gNB 100A (S257). The CHO request ACK includes configuration information of the candidate cell. The configuration information of the candidate cell includes information on the candidate cell and a transition condition to the candidate cell.

By the above-described processing, the gNBs 100B and 100C are set as candidate cells for the Conditional HO destination of the terminal 200.

When the gNB 100A receives the CHO request ACK from the gNB 100B, the gNB 100A transmits a CHO modification request to the terminal 200, after the setting of the candidate cell is completed (S259). The CHO modification request includes difference information between the configuration information of the candidate cell previously notified to the terminal 200 and current configuration information of the candidate cell. Specifically, the CHO modification request includes only the configuration information of the gNB 100B (candidate cell) as the difference information.

The terminal 200 changes the configuration of the candidate cell on the basis of the CHO modification request, and transmits a CHO modification complete to the gNB 100A after the setting of the candidate cell is completed (S261).

Thereby, when the configuration of the candidate cell is changed, each gNB notifies the terminal 200 of only the difference information, so that it is possible to cause the terminal 200 to set the configuration information of the candidate cell in the cell formed by the gNB. Therefore, even when a plurality of terminals 200 move cells at the same time, a decrease in throughput can be suppressed.

Note that each gNB may be previously notified of a message indicating that only the difference information is notified to the terminal when the configuration information of the candidate cell previously notified is changed, from the network.

### (4) Action/Effect

According to the embodiment described above, the terminal 200 receives the configuration information of the transition destination cell from the gNB 100A by the conditional cell transition, in the gNB 100A in which the terminal 200 resides. The terminal 200 receives a message indicating that the transition destination cell is shared with the gNB 100B. When the terminal 200 transitions from the gNB 100A to the gNB 100B, the terminal 200 uses the configuration information of the transition destination cell in the gNB 100B, on the basis of the message.

With the above-described configuration, when the terminal 200 transitions from the gNB 100A to the gNB 100B, the gNB 100A and the gNB 100B share the transition destination cell. As a result, the terminal 200 can use the configuration information of the transition destination cell acquired from the gNB 100A according to an instruction from the network, without acquiring configuration information of a new transition destination cell from the network, in the gNB 100B.

Therefore, even when a plurality of terminals move from the gNB 100A to the gNB 100B at the same time, the network does not notify each terminal of the configuration information of the new transition destination cell by higher layer signaling, so that it is possible to suppress a decrease in throughput, a decrease in terminal connection rate, and the like.

According to the embodiment described above, the terminal 200 receives a transition command instructing a transition from the gNB 100A to the gNB 100B. The transition command includes a message indicating that the transition destination cell is shared with the gNB 100B.

With the above-described configuration, the terminal 200 can transition from the gNB 100A to the gNB 100B, on the basis of the transition command, and can use the configuration information of the transition destination cell in the gNB 100B.

Therefore, even when a plurality of terminals move from the gNB 100A to the gNB 100B at the same time on the basis of the transition command, a decrease in throughput can be further suppressed.

### (5) Modifications

In the above-described operation example, the take-over of the Conditional HO (candidate cell) and the setting of the Conditional HO (candidate cell) have been described. However, the same operation can be applied to a Conditional SCG Connection (CSC). In the CSC, similarly to the Conditional HO, take-over of the transition destination candidate cell, setting of the list of the transition destination candidate cell, and difference setting of the transition destination cell are applied.

Note that the Conditional SCG Connection is described in, for example, a contribution to 3GPP R2-1903677 (3GPP TSG-RAN WG2 # 105bis, Xi'an, China, April 8-12, 2019). The Conditional SCG Connection may be called a Conditional PSCell addition or the like.

### (5.1) Conditional SCG Connection

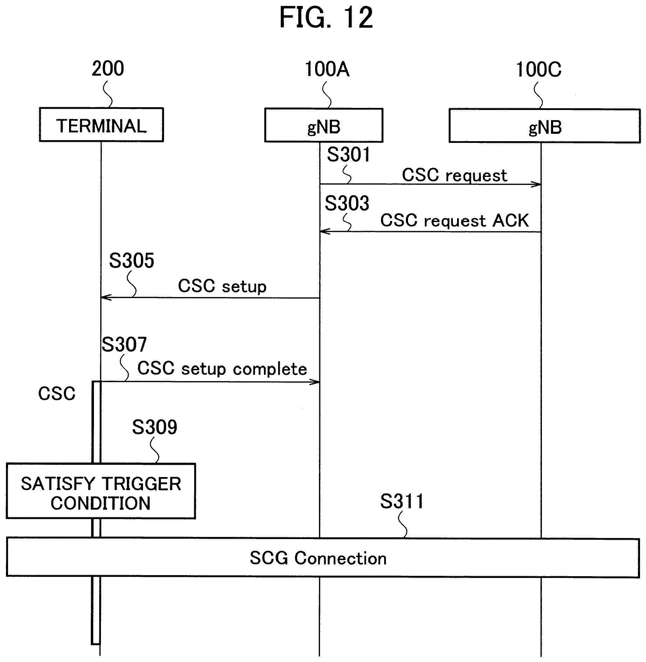

Fig. 12 illustrates a basic sequence in Conditional HO. S301 to S311 in Fig. 12 correspond to S11 to S21 of the basic sequence of Conditional HO illustrated in Fig. 5. Hereinafter, parts different from Conditional HO will be mainly described.

As illustrated in Fig. 12, the gNB 100A (source cell) transmits a CSC request to the gNB 100C to be the candidate cell of the transition destination cell by the CSC (S301).

When the gNB 100C (candidate cell) receives the CSC request from the gNB 100A, the gNB 100C transmits a CSC request ACK, which is an acknowledgment to the CSC request, to the gNB 100A (S303). The CSC request ACK includes configuration information of the candidate cell. The configuration information of the candidate cell includes information on the candidate cell and a transition condition to the candidate cell.

By the above-described processing, the gNB 100C is set as the candidate cell of the CSC destination of the terminal 200.

When the gNB 100A receives the CSC request ACK from the gNB 100C, the gNB 100A transmits a CSC setup to the terminal 200 after the setting of the candidate cell is completed (S305). The CSC setup includes the configuration information of the candidate cell transmitted from the gNB 100C. The terminal 200 performs the setting of the candidate cell on the basis of the CSC setup, and transmits a CSC setup complete to the gNB 100A after the setting of the candidate cell is completed (S307).

Then, the terminal 200 can execute the Conditional SCG Connection to the candidate cell, and when a transition condition (trigger condition) to the candidate cell is satisfied (S309), the terminal 200 executes an SCG Connection procedure to the candidate cell according to the Conditional SCG Connection (S311).

### (5.2) Take-over of Conditional SCG Connection

Next, take-over of Conditional SCG Connection will be described. In the present operation, when the terminal 200 transitions from the gNB 100A (source cell) to the gNB 100B (target cell), the terminal 200 uses the configuration information of the candidate cell notified by the gNB 100A in the gNB 100B.

Note that, in the present operation example, the gNBs 100A and 100B are a source master node (source MN) and a target master node (target MN) in DC, or a source secondary node (source SN) and a target secondary node (target SN) in DC. The gNB 100C is a secondary node (SN) in DC, and is a candidate cell of the CSC. Further, the gNB 100A and the gNB 100B share the gNB 100C as the candidate cell of the CSC.

### (5.2.1) Operation Example 1

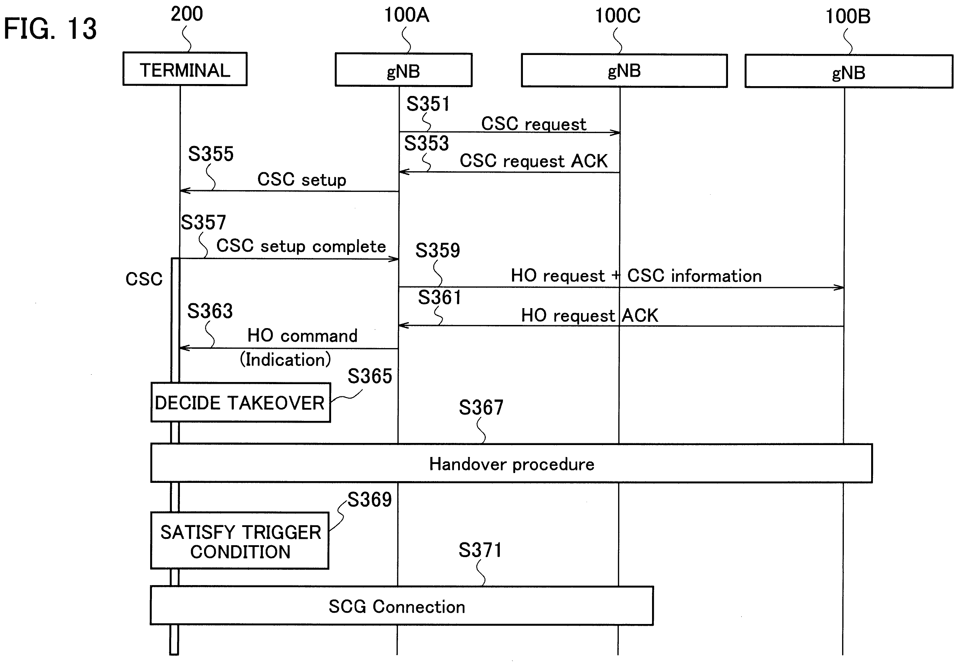

Fig. 13 is a diagram illustrating a take-over sequence (operation example 1) of the Conditional SCG Connection. S351 to S371 in Fig. 13 correspond to S51 to S71 in the take-over sequence (operation example 1) of the Conditional HO in Fig. 6. Hereinafter, parts different from the Conditional HO will be mainly described.

As illustrated in Fig. 13, when the gNB 100A decides to cause the terminal 200 to transition to the gNB 100B, the gNB 100A transmits an HO request to the gNB 100B (S359). In S359, the gNB 100A transmits the configuration information of the candidate cell to the gNB 100B as CSC information.

When the gNB 100B receives the HO request from the gNB 100A, the gNB 100B transmits an HO request ACK, which is an acknowledgment to the HO request, to the gNB 100A (S361).

When the gNB 100A receives the HO request ACK from the gNB 100B, the gNB 100A transmits an HO command (transition command) to the terminal 200 (S363). When the terminal 200 receives the HO command (also called SCG connection), the terminal 200 suspends the Conditional SCG Connection. Further, at timing of transmitting the HO command in S63, the gNB 100A transmits, to the terminal 200, a message (Indication) indicating that the candidate cell of the CSC notified from the gNB 100A is shared by the gNB 100A and the gNB 100B. In the present operation example, the message is included in the HO command.

By the above-described message, the gNB 100A can explicitly notify the terminal 200 that the candidate cell is also shared by the gNB 100B. On the basis of the above-described message, when the terminal 200 transitions from the gNB 100A (source cell) to the gNB 100B (target cell), the terminal 200 decides to take over (use) the configuration information of the candidate cell notified by the gNB 100A in the gNB 100B (S365).

Note that, instead of the message indicating that the CSC candidate cell notified from the gNB 100A is shared by the gNB 100A and the gNB 100B, the gNB 100A may transmit, to the terminal 200, a message (Indication) indicating that the configuration information of the candidate cell notified by the gNB 100A is also used in the gNB 100B sharing the candidate cell. In the present operation example, the message is included in the HO command.

By the above-described message, the gNB 100A can directly notify the terminal 200 that the configuration information of the candidate cell is also used in the gNB 100B. On the basis of the above-described message, when the terminal 200 transitions from the gNB 100A (source cell) to the gNB 100B (target cell), the terminal 200 decides to take over (use) the configuration information of the candidate cell notified by the gNB 100A in the gNB 100B (S365).

### (5.2.2) Operation Example 2

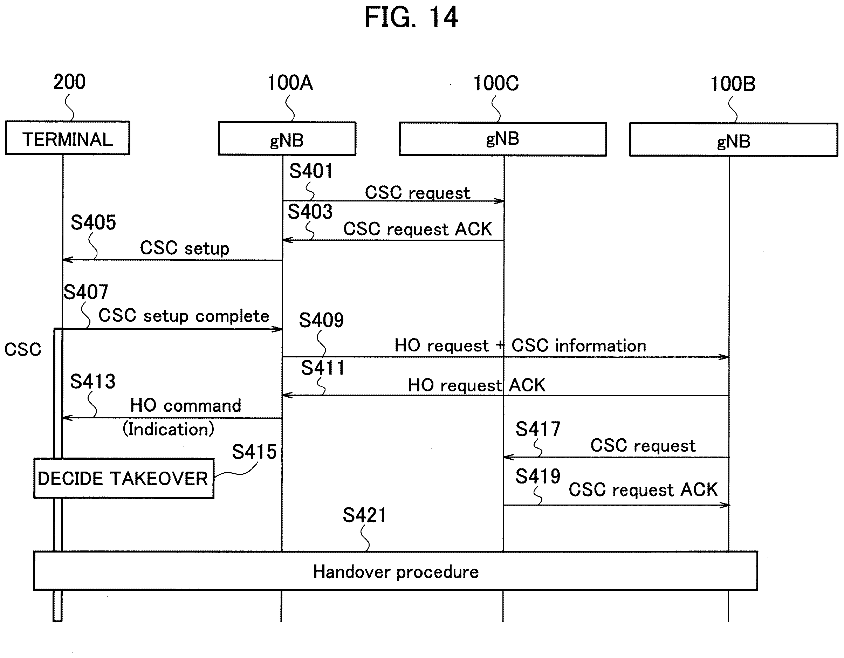

Fig. 14 is a diagram illustrating a take-over sequence (operation example 2) of Conditional SCG Connection. S401 to S421 in Fig. 14 correspond to S101 to S121 of the take-over sequence (operation example 2) of the Conditional HO in Fig. 7. Hereinafter, parts different from the Conditional HO will be mainly described.

As illustrated in Fig. 14, after transmitting the HO request ACK to the gNB 100A, the gNB 100B transmits a CSC request to the gNB 100C (S417). When the gNB 100C receives the CSC request from the gNB 100B, the gNB 100C transmits a CSC request ACK, which is an acknowledgment to the CSC request, to the gNB 100B (S419). The CSC request ACK includes configuration information of the candidate cell. The configuration information of the candidate cell includes at least information on the candidate cell.

In S419, by receiving the information on the candidate cell from the gNB 100C, the gNB 100B can acquire an identifier (for example, TEID) for identifying a transmission destination to be used at the time of data forwarding.

### (5.2.3) Operation Example 3

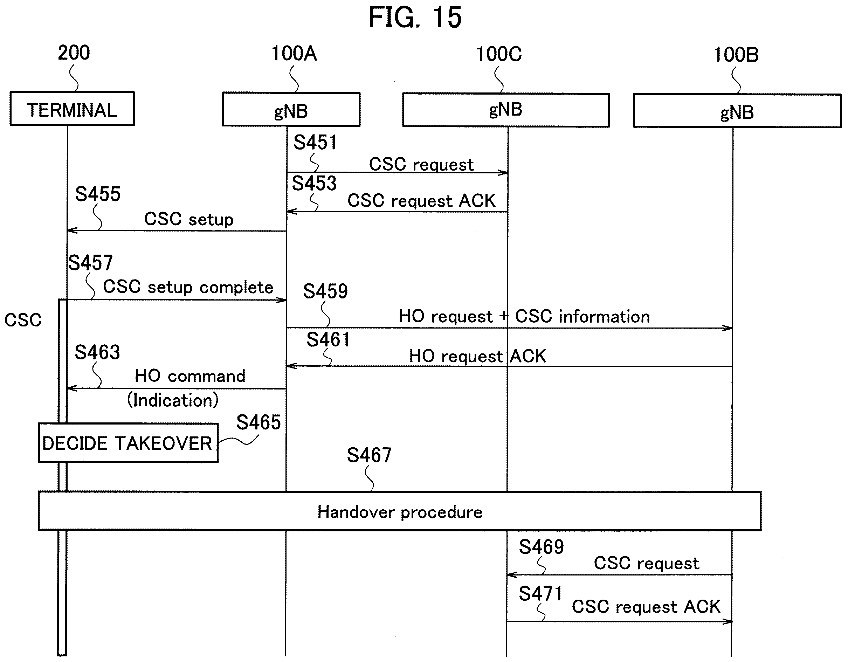

Fig. 15 is a diagram illustrating a take-over sequence (operation example 3) of the Conditional SCG Connection. S451 to S471 in Fig. 15 correspond to S151 to S171 in the take-over sequence (operation example 3) of the Conditional HO in Fig. 8. Hereinafter, parts different from the Conditional HO will be mainly described.

As illustrated in Fig. 15, when the terminal 200 transitions to the gNB 100B, the gNB 100B transmits a CSC request to the gNB 100C (S469). When the gNB 100C receives the CSC request from the gNB 100B, the gNB 100C transmits a CSC request ACK, which is an acknowledgment to the CSC request, to the gNB 100B (S471). The CSC request ACK includes configuration information of the candidate cell. The configuration information of the candidate cell includes at least information on the candidate cell.

In S471, by receiving the information on the candidate cell from the gNB 100C, the gNB 100B can acquire an identifier (for example, TEID) for identifying a transmission destination to be used at the time of data forwarding.

### (5.3) Setting by List of Conditional SCG Connection

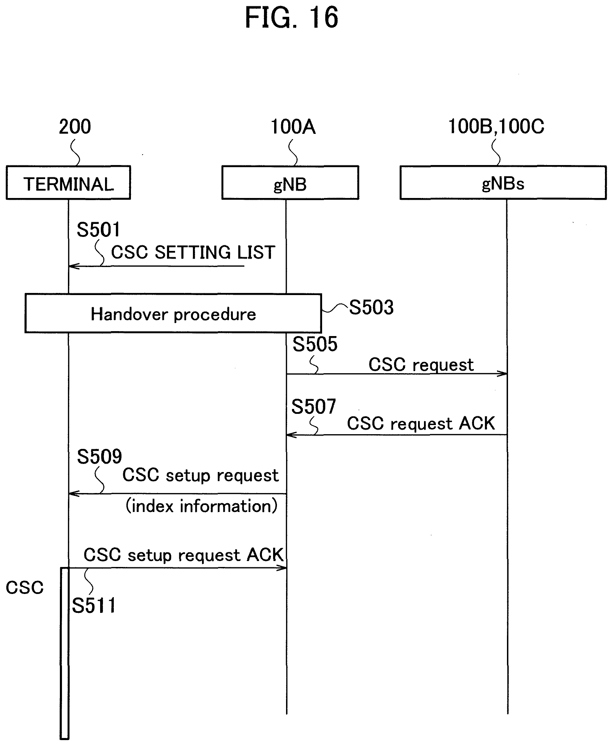

Next, setting by a list of the Conditional SCG Connection will be described. Fig. 16 is a diagram illustrating a setting sequence by a list of the Conditional SCG Connection. S501 to S511 in Fig. 16 correspond to S201 to S211 of the setting sequence by the list of the Conditional HO in Fig. 10. Hereinafter, parts different from the Conditional HO will be mainly described.

Note that, in the present operation example, the gNB 100A is an MN or SN in DC, and the gNBs 100B and 100C are SNs in DC and are candidate cells of the CSC. Further, in the present operation example, the terminal 200 executes a normal handover or a handover according to the Conditional HO, and transitions to the gNB 100A.

As illustrated in Fig. 16, the terminal 200 previously receives a CSC setting list from the network (S501). After previously receiving the CSC setting list from the network, the terminal 200 executes a normal handover or a handover according to the Conditional SCG Connection, and transitions to the gNB 100A (S503).

When the execution of the handover is completed between the gNB 100A and the terminal 200, the gNB 100A (source cell) transmits a CSC request to the gNBs 100B and 100C each of which is the candidate cell to be a candidate for the transition destination cell by the Conditional SCG Connection (S505).

When each of the gNBs 100B and 100C (candidate cells) receives the CSC request from the gNB 100A, it transmits a CSC request ACK, which is an acknowledgment to the CSC request, to the gNB 100A (S507). The CSC request ACK includes configuration information of the candidate cell. The configuration information of the candidate cell includes information on the candidate cell and a transition condition to the candidate cell.

When the gNB 100A receives the CSC request ACK from each of the gNBs 100B and 100C, the gNB 100A transmits a CSC setup request to the terminal 200 (S509). The CSC setup request includes index information assigned to the cell formed by the gNB 100A. When the terminal 200 receives the CSC setup request, the terminal 200 refers to the CSC configuration list previously notified, and searches for the configuration information of the candidate cell associated with the cell number corresponding to the index information included in the CSC setup request. After the setting of the candidate cell is completed, the terminal 200 transmits a CSC setup request ACK to the gNB 100A (S511) .

### (5.4) Difference setting of Conditional SCG Connection

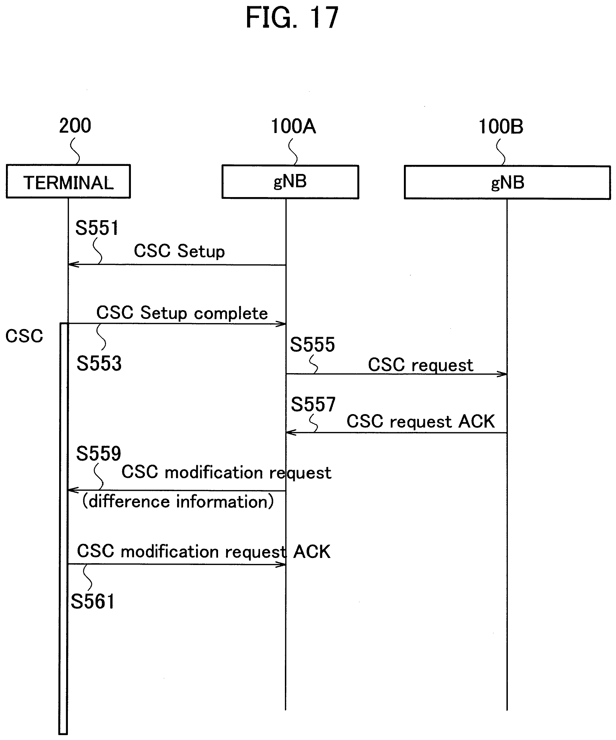

Next, difference setting of the Conditional SCG Connection will be described. Fig. 17 is a diagram illustrating a difference setting sequence of the Conditional SCG Connection. S551 to S561 in Fig. 17 correspond to S251 to S261 in the difference setting sequence of the Conditional HO in Fig. 11. Hereinafter, parts different from the Conditional HO will be mainly described.

Note that, in the present operation example, the gNB 100A is an MN or SN in DC, and the gNBs 100B and 100C are SNs in DC and are candidate cells of the CSC. Further, in the present operation example, after notifying the terminal 200 of the configuration information of the gNB 100C (candidate cell), the gNB 100A causes the terminal 200 to add the configuration information of the gNB 100B (candidate cell).

As illustrated in Fig. 17, when the gNB 100A finds the gNB 100B as a candidate cell to be a candidate for the transition destination cell by the Conditional SCG Connection, the gNB 100A transmits a CSC request to the gNB 100B (S555).

When the gNB 100B (candidate cell) receives the CSC request from the gNB 100A, the gNB 100B transmits a CSC request ACK, which is an acknowledgment to the CSC request, to the gNB 100A (S557). The CSC request ACK includes configuration information of the candidate cell. The configuration information of the candidate cell includes information on the candidate cell and a transition condition to the candidate cell.

By the above-described processing, the gNBs 100B and 100C are set as candidate cells for the Conditional SCG Connection destination of the terminal 200.

When the gNB 100A receives the CSC request ACK from the gNB 100B, the gNB 100A transmits a CSC modification request to the terminal 200, after the setting of the candidate cell is completed (S559). The CSC modification request includes difference information between the configuration information of the candidate cell previously notified to the terminal 200 and current configuration information of the candidate cell. Specifically, the CSC modification request includes only the configuration information of the gNB 100B (candidate cell) as the difference information.

The terminal 200 changes the configuration of the candidate cell on the basis of the CSC modification request, and transmits a CSC modification complete to the gNB 100A after the setting of the candidate cell is completed (S561).

### (6) Other embodiments

Although the contents of the present invention have been described according to the embodiments, the present invention is not limited to these descriptions, and it is obvious to those skilled in the art that various modifications and improvements can be made thereto.

For example, in the embodiments described above, the NR has been described as an example. However, the Conditional HO and the Conditional SCG Connection are also applicable to the LTE, and the same operation may be performed in the LTE.

The block configuration diagram (Fig. 2) used for describing the embodiments illustrates blocks of functional units. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

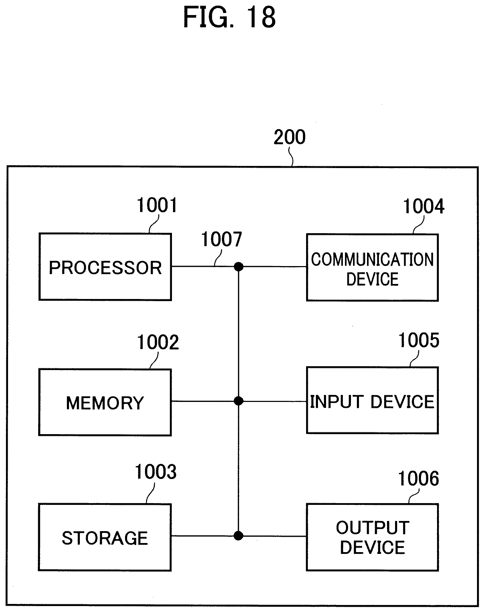

Further, the gNBs 100A, 100B, and 100C and the terminal 200 described above may function as a computer that performs the processing of the radio communication method of the present disclosure. Fig. 18 is a diagram illustrating an example of a hardware configuration of the device. As illustrated in Fig. 18, the device can be configured as a computer device including a processor 1001, a memory 1002, a storage 1003, a communication device 1004, an input device 1005, an output device 1006, a bus 1007, and the like.

Furthermore, in the following description, the term "device" can be replaced with a circuit, device, unit, and the like. A hardware configuration of the device may be constituted by including one or plurality of the devices illustrated in the figure, or may be constituted without including a part of the devices.

Each functional block of the device is realized by any of hardware elements of the computer device or a combination of the hardware elements.

Moreover, the processor 1001 performs operation by loading predetermined software (computer program) on hardware such as the processor 1001 and the memory 1002, and realizes various functions of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (computer program code), a software module, data, and the like from at least one of the storage 1003 and the communication device 1004 into the memory 1002, and executes various processes according to them. As the computer program, a computer program that is capable of executing on the computer at least a part of the operation described in the above embodiments, is used. Alternatively, various processes described above may be executed by one processor 1001 or may be executed simultaneously or sequentially by two or more processors 1001. The processor 1001 may be implemented by using one or more chips. Alternatively, the computer program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 can be called a register, a cache, a main memory (main storage device), and the like. The memory 1002 can store therein programs (computer program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, and a key drive), a floppy (Registered Trademark) disk, a magnetic strip, and the like. The storage 1003 may be called an auxiliary storage device. The recording medium can be, for example, a database including at least one of the memory 1002 and the storage 1003, a server, or other appropriate media.

The communication device 1004 is hardware (transmission and reception device) capable of performing communication between computers via at least one of a wired network and wireless network. The communication device 1004 is also called, for example, a network device, a network controller, a network card, a communication module, and the like.

The communication device 1004 may include a radiofrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that the input device 1005 and the output device 1006 may be integrated (for example, a touch panel).

In addition, the respective devices, such as the processor 1001 and the memory 1002, are connected to each other with the bus 1007 for communicating information therebetween. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these kinds of hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcasting information (Master Information Block (MIB), System Information Block (SIB)), other signals, or a combination of these. The RRC signaling may be called an RRC message, for example, or may be an RRC Connection Setup message, an RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input and output information can be stored in a specific location (for example, a memory) or may be managed in a management table. The information to be input and output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other names, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote sources by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

Note that the terms described in the present disclosure and terms necessary for understanding the present disclosure may be replaced by terms having the same or similar meanings. For example, at least one of a channel and a symbol may be a signal (signaling) . Also, a signal may be a message. Further, a component carrier (CC) may be referred to as a carrier frequency, a cell, a frequency carrier, or the like.

The terms "system" and "network" used in the present disclosure can be used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of at least one of a base station and a base station subsystem that performs the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable terms.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter, the same applies). For example, each of the aspects/embodiments of the present disclosure may be applied to a configuration that allows communication between a base station and a mobile station to be replaced with a communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured with one or more frames in time domain. One frame or each of a plurality of frames in the time domain may be called a subframe.

Further, the subframe may be configured with one or more slots in the time domain. The subframe may be a fixed time length (for example, 1 ms) that does not depend on numerology.

The numerology may be a communication parameter applied to at least one of transmission or reception of a certain signal or channel. The numerology may represent, for example, at least one of a subcarrier spacing (SCS), a bandwidth, a symbol length, a cyclic prefix length, a Transmission Time Interval (TTI), the number of symbols per TTI, a radio frame configuration, specific filtering processing performed by a transceiver in the frequency domain, or specific windowing processing performed by the transceiver in the time domain.

The slot may be configured with one or more symbols (Orthogonal Frequency Division Multiplexing (OFDM) symbols, Single Carrier Frequency Division Multiple Access (SC-FDMA) symbols, and the like) in the time domain. The slot may be a unit of time based on the numerology.

The slot may include a plurality of minislots. Each minislot may be configured with one or more symbols in the time domain. Further, the minislot may also be called a subslot. The minislot may be configured with fewer symbols than those of slots. A PDSCH (or PUSCH) transmitted in a time unit larger than the minislot may be called a PDSCH (or PUSCH) mapping type A. A PDSCH (or PUSCH) transmitted using the minislot may be called a PDSCH (or PUSCH) mapping type B.

Each of the radio frame, subframe, slot, minislot, and symbol represents a time unit for transmitting a signal. Different names may be used for the radio frame, subframe, slot, minislot, and symbol, respectively.

For example, one subframe may be called a transmission time interval (TTI), a plurality of consecutive subframes may be called a TTI, and one slot or one minislot may be called a TTI. That is, at least one of the subframe or the TTI may be a subframe (1 ms) in the existing LTE, a period shorter than 1 ms (for example, 1 to 13 symbols), or a period longer than 1 ms. Note that a unit representing the TTI may also be called a slot, a minislot, or the like, instead of a subframe.

Here, the TTI refers to a minimum time unit of scheduling in radio communication, for example. For example, in the LTE system, a base station performs scheduling to allocate radio resources (frequency bandwidth, transmission power, or the like that can be used in each user terminal) to each user terminal in units of TTI. Note that the definition of the TTI is not limited thereto.

The TTI may be a transmission time unit such as a channel-encoded data packet (transport block), a code block, or a code word, or may be a processing unit of scheduling, link adaptation, or the like. Note that, when a TTI is given, a time interval (for example, the number of symbols) in which a transport block, a code block, a code word, or the like is actually mapped may be shorter than the TTI.

Note that, in a case where one slot or one minislot is called a TTI, one or more TTIs (that is, one or more slots or one or more minislots) may be a minimum time unit of scheduling. Further, the number of slots (the number of minislots) constituting the minimum time unit of the scheduling may be controlled.

A TTI having a time length of 1 ms may be called a normal TTI (TTI in LTE Rel. 8 to 12), a normal TTI, a long TTI, a normal subframe, a long subframe, a slot, or the like. A TTI shorter than the normal TTI may be called a shortened TTI, a short TTI, a partial TTI (partial or fractional TTI), a shortened subframe, a short subframe, a minislot, a subslot, a slot, or the like.

Note that the long TTI (for example, the normal TTI, the subframe, or the like) may be read as a TTI having a time length exceeding 1 ms, and the short TTI (for example, the shortened TTI or the like) may be read as a TTI having a TTI length of less than the TTI length of the long TTI and equal to or more than 1 ms.

The resource block (RB) is a resource allocation unit in the time domain and the frequency domain, and may include one or more consecutive subcarriers in the frequency domain. The number of subcarriers included in the RB may be the same regardless of the numerology, for example, twelve. The number of subcarriers included in the RB may be determined based on the numerology.

Further, the time domain of the RB may include one or more symbols, and may have a length of one slot, one minislot, one subframe, or one TTI. One TTI, one subframe, or the like may be configured with one or a plurality of resource blocks.

Note that one or more RBs may be called a physical resource block (Physical RB: PRB), a subcarrier group (SubCarrier Group: SCG), a resource element group (Resource Element Group: REG), a PRB pair, an RB pair, or the like.

Further, the resource block may be configured with one or more resource elements (RE). For example, one RE may be a radio resource region of one subcarrier and one symbol.

The bandwidth part (BWP) (which may be called a partial bandwidth, or the like) may represent a subset of continuous common resource blocks (RBs) for certain numerology in a certain carrier. Here, the common RB may be specified by an index of RB based on a common reference point of the carriers. The PRB may be defined in a certain BWP and numbered within the BWP.

The BWP may include a BWP (UL BWP) for UL and a BWP (DL BWP) for DL. One or more BWPs may be configured in one carrier for a UE.

At least one of the configured BWPs may be active, and the UE may not assume that a predetermined signal/channel is transmitted and received outside the active BWP. Note that "cell", "carrier", and the like in the present disclosure may be read as "BWP".

The above-described structures such as a radio frame, a subframe, a slot, a minislot, and a symbol are merely examples. For example, the configuration such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, and a cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some nonlimiting and non-exhaustive examples, by using electromagnetic energy having wavelengths in the radio frequency domain, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in any other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

The terms "determining" and "determining" used in the present disclosure may encompass a wide variety of operations. The terms "determining" and "deciding" can include, for example, judging, calculating, computing, processing, deriving, investigating, looking up (search or inquiry) (for example, searching in a table, database, or other data structure), and ascertaining. In addition, the terms "determining" and "deciding" can include receiving (for example, receiving information), transmitting (for example, transmitting information), inputting, outputting, and accessing (for example, accessing data in a memory), and the like. In addition, the terms "determining" and "deciding" can include "resolving", "selecting", "choosing", "establishing", "comparing", and the like. In other words, the terms "determining" and "deciding" can include any operation. Further, the term "determining (deciding)" may also be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### INDUSTRIAL APPLICABILITY

According to the terminal described above, even when a plurality of terminals move a cell at the same time while applying conditional cell transition such as Conditional HO, a decrease in throughput can be suppressed, which is useful.

### EXPLANATION OF REFERENCE NUMERALS

- 10: Radio communication system
- 100A, 100B, 100C: gNB
- 200: Terminal
- 210: Transmitting unit
- 220: Receiving unit
- 230: Holding unit
- 240: Control unit
- 1001: Processor
- 1002: Memory
- 1003: Storage
- 1004: Communication device
- 1005: Input device
- 1006: Output device
- 1007: Bus

## Claims

1. A terminal comprising:
a first receiving unit that, in a first cell in which the terminal resides, receives configuration information of a transition destination cell from the first cell by a conditional cell transition;
a second receiving unit that receives a message indicating that the transition destination cell is shared with a second cell; and
a control unit that uses the configuration information of the transition destination cell in the second cell, when the terminal transitions from the first cell to the second cell, on the basis of the message.

2. The terminal according to claim 1, wherein
the second receiving unit receives a transition command instructing a transition from the first cell to the second cell, and
the transition command includes the message.
